# EUROPÄISCHE PATENTSCHRIFT

(11) **EP 1 876 431 B1**
(45) Veröffentlichungstag und Bekanntmachung des Hinweises auf die Patenterteilung: **21.08.2013**
(21) Anmeldenummer: 06116841.5
(22) Anmeldetag: 07.07.2006
(51) Int. Cl.: G01G 19/52, G01N 5/04, G01G 19/00

(54) **Messgerät zur gravimetrischen Feuchtigkeitsbestimmung**
Measuring apparatus for gravimetrical determination of moisture
Appareil de mesure pour la determination gravimétrique d'humidité

(43) Veröffentlichungstag der Anmeldung: 09.01.2008
(73) Patentinhaber: Mettler-Toledo AG, 8606 Greifensee (CH)
(72) Erfinder: Lüchinger, Paul, 8610, Uster (CH)

(56) Entgegenhaltungen:
- EP-B1- 0 611 956
- DE-A1- 3 305 846
- US-A1- 2004 103 718

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang manuell bestimmt. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und der Prüfraumbedingungen deren Gewichtswert ab, welcher einer Gewichtsverlust-Trocknungszeitkurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum und seine Ausgestaltung beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffnenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal angeordnet, um bei Proben geringer Viskosität zu vermeiden, dass sich die Probe bezogen auf die Lastrichtung am tiefsten Punkt der Probeschale sammelt.

Als Mittel zur Erwärmung der Probe werden verschiedene Strahler wie Heizstrahler, Mikrowellengeneratoren, Halogen- und Quarzlampen verwendet. Ein Messgerät zur gravimetrischen Feuchtigkeitsbestimmung der genannten Gattung ist aus der europäischen Patentschrift EP 0 611 956 B1 bekannt. Bei diesem Gerät erfolgt die Beschickung der Waagschale ausserhalb des Messgerätes zur gravimetrischen Feuchtigkeitsbestimmung. Dazu wird die Waage auf einem schubladenförmigen Auszug aus dem Messgerätgehäuse herausgefahren. Als Strahler wird eine ringförmige Halogenlampe eingesetzt, welche im Betriebszustand oberhalb der Probeaufnahme angeordnet ist.

Durch Versuche konnte festgestellt werden, dass eine der Hauptursachen einer ungenauen Messwerterfassung bei bestehenden Messgeräten zur gravimetrischen Feuchtigkeitsbestimmung die Art der verwendeten Strahler und deren Ausgestaltung ist. So können Strahler mit Durchbrüchen oder Strahler, deren Strahlung im Wesentlichen von einem Punkt oder einer Linie ausgeht, zu einer ungleichmässigen Bestrahlung der Probe führen, wodurch an einzelnen Stellen der Probe die Energiedichte so hoch sein kann, dass sich die Probe stellenweise thermisch zersetzt.

Sofern der Strahler eine flächige, die Probe überspannende und weitgehend ebene Ausgestaltung aufweist, kann sich zwischen der Probe und dem Strahler ein lokal verharrendes und mit Feuchtigkeit gesättigtes Gaspolster bilden und den weiteren Austritt der Feuchtigkeit aus der Probe verhindern. Eine solche Hemmung des Trocknungsvorgangs könnte die Trocknungszeit erheblich beeinflussen, wobei insbesondere die durch Temperatureinflüsse zufälligen Strömungsverhältnisse zwischen der Strahler und der Probe ins Messergebnis einfliessen.

Die durch Hemmung des Trocknungsvorgangs verursachten Trocknungszeit- Fehler und/oder die durch thermische Zersetzung entstehenden Messfehler in den Probengewichtswerten limitieren die Genauigkeit bei einer Auswertung durch das oben beschriebene Rechenmodell. Alternativ zur Verwendung des Rechenmodells kann das bekannte Verfahren angewendet werden, bei dem möglichst die gesamte Feuchtigkeit ausgetrieben werden muss. Dies erfordert aber eine sehr lange Trocknungszeit, womit das Risiko grösser wird, dass eine thermische Zersetzung oder Oxidation der Probe durch die lange anhaltende Beaufschlagung mit der Wärmestrahlung der Strahler erfolgt.

Aus den vorangehend erläuterten Gründen ist eine Absolutwertbestimmung des Feuchtigkeitsgehaltes mit einem Messgerät zur gravimetrischen Feuchtigkeitsbestimmung kaum möglich. Demzufolge wird für die genauere Bestimmung der Feuchtigkeit eines Stoffes oder für die Eichung von Trocknern immer noch das Karl-Fischer-Titrationsverfahren angewendet. Dieses Verfahren ist sehr arbeitsintensiv, anfällig auf Anwenderfehler und teuer.

Aufgabe der vorliegenden Erfindung ist es daher, ein Messgerät zur gravimetrischen Feuchtigkeitsbestimmung mit einem Strahler zu schaffen, welcher eine verbesserte Strahlungsverteilung über die Probe aufweist. Ferner sollte infolge der verbesserten Strahlungsverteilung das Austrittsverhalten der Feuchtigkeit aus der Probe nicht beeinträchtigt werden.

Diese Aufgabe wird erfindungsgemäss mit einem Messgerät zur gravimetrischen Feuchtigkeitsbestimmung gemäss dem Anspruch 1 gelöst.

Das erfindungsgemässe Messgerät zur gravimetrischen Feuchtigkeitsbestimmung weist mindestens einen Strahler, eine Wägezelle und eine mit der Wägezelle verbindbare Probeaufnahme auf. Auf die Probeaufnahme ist eine Probe auflegbar beziehungsweise wieder entfernbar. Der mindestens eine Strahler ist bezogen auf die Lastrichtung oberhalb und/oder unterhalb der Probe angeordnet. Das heisst, dass ein Strahler oberhalb der Probe, unterhalb der Probe aber auch oberhalb und unterhalb der Probe angeordnet sein kann. Zwischen dem Strahler und der Probe ist jeweils ein drehbar gelagerter Wärmeleiter angeordnet, dessen Drehachse orthogonal zur ausgedehnten Fläche der Probe oder der Probeaufnahme ausgerichtet ist. Durch den Wärmeleiter ist die Strahlung des Strahlers zumindest teilweise aufnehmbar, die aufgenommene Strahlung über mindestens eine Abstrahlungsfläche des Wärmeleiters als Wärmestrahlung an die Probe abgebbar und zumindest infolge seiner Drehbarkeit die gesamte Oberfläche der Probe bestrahlbar. Die Funktion des Wärmeleiters im erfindungsgemässen Messgerät ist somit nicht nur auf die reine Aufnahme und Abgabe von Wärmestrahlung beschränkt. Der Wärmeleiter kann erfindungsgemäss ebenfalls der Aufnahme anderer Strahlungsarten wie beispielsweise elektromagnetischer Strahlung und deren Umwandlung in Wärmestrahlung dienen, welche dann über die Abstrahlungsfläche an die Probe abgegeben wird. Der Wärmeleiter muss auch nicht zwingend die ganze Probe überspannen, durch den in Drehung versetzten Wärmeleiter wird die ganze Oberfläche der Probe berührungslos überstrichen und so die Wärmestrahlung über die Probe annähernd gleichmässig verteilt.

Als Wärmeleiter wird eine Vorrichtung bezeichnet, die über mindestens eine Stelle Strahlungsenergie aufnehmen kann und diese Strahlungsenergie als Wärmestrahlung annähernd gleichmässig über deren Abstrahlungsfläche verteilt wieder abgibt. Es ist dabei unerheblich, ob der Strahler getrennt vom Wärmeleiter gehäusefest angeordnet ist, oder ob der Strahler im Wärmeleiter integriert ist.

Damit die Wärmestrahlung gleichmässig verteilt wird, weist die Abstrahlungsfläche vorzugsweise über den gesamten Drehwinkel hin denselben Abstand zur ausgedehnten Ebene der Probe auf. Vorteilhafterweise ist daher der Wärmeleiter im Wesentlichen in einer Ebene orthogonal zur Drehachse flächig ausgestaltet, wobei die Abstrahlungsfläche im Wesentlichen der gegen die Probe hin gerichteten, ausgedehnten Fläche des Wärmeleiters entspricht. Ferner ist es vorteilhaft, wenn die Drehachse des Wärmeleiters parallel zur Lastrichtung angeordnet ist.

Idealerweise entspricht die Abstrahlungsfläche des Wärmeleiters einer Kreisfläche, deren Flächeninhalt im Wesentlichen der ausgedehnten Ebene der Probe entspricht. Dadurch wird der Strahler durch den Wärmeleiter vor Verschmutzung durch die aufsteigenden Gase weitgehend geschützt wenn der Wärmeleiter keine Durchbrüche aufweist oder aus gasdurchlässigem Material besteht.

Sofern der Strahler direkt im Wärmeleiter angeordnet ist, kann der mindestens eine Wärmeleiter auch einem Kreissektor entsprechen.

In einer ersten Ausgestaltung kann der Wärmeleiter in der Abstrahlungsfläche vorzugsweise in Lastrichtung verlaufende Durchbrüche und/oder Einschnitte aufweisen, damit die während eines Trocknungsvorganges aus der Probe austretende Feuchtigkeit nicht in einem Gaspolster zwischen dem Wärmeleiter und der Probe gestaut wird und so den Trocknungsvorgang negativ beeinflusst.

In einer zweiten Ausgestaltung kann der Wärmeleiter auch aus porösem, in Lastrichtung gasdurchlässigem Material bestehen. Dadurch kann ebenfalls erreicht werden, dass die aus der Probe ausgetretene Feuchtigkeit nicht über der Oberfläche der Probe verharrt.

In einer dritten Ausgestaltung kann der Wärmeleiter mindestens einen Durchbruch oder Einschnitt aufweisen, durch dessen Ausgestaltung am Wärmeleiter mindestens ein Steg analog eines Propellerblattes oder einer Schaufel ausgebildet ist. Durch diesen mindestens einen Steg kann eine vorzugsweise entgegen der Lastrichtung gerichtete Strömung im gasförmigen Medium erzeugt, und das mit Feuchtigkeit angereicherte gasförmige Medium aus dem Umfeld der Probe entfernt werden.

Durch die in Drehung versetzte Abstrahlungsfläche des Wärmeleiters werden in unmittelbarer Nähe der Abstrahlungsfläche Teile des Gaspolsters mitgerissen und durch die Zentrifugalkraft an den Randbereich der Abstrahlungsfläche befördert. Dort kann das an den Randbereich beförderte, mit Feuchtigkeit angereicherte, gasförmige Medium durch die Strömung beispielsweise einer Absaugvorrichtung erfasst und abgeführt werden. Oder das erwärmte, gasförmige Medium wird im Randbereich von kaltem und dadurch schwerem, gasförmigem Medium aus der unmittelbaren Umgebung Probeaufnahme verdrängt. Das warme gasförmige Medium steigt dadurch im Prüfraum nach oben und verlässt diesen, wie im Stand der Technik bekannt, über Lüftungsschlitze. Um die Förderleistung bei gleicher Drehzahl des Wärmeleiters zu verbessern, kann die Abstrahlungsfläche des Wärmeleiters mindestens eine Rippe, Rille, Nut oder Vertiefung aufweisen.

Damit der Wärmeleiter die Wärme über die gesamte Abstrahlungsfläche mit gleichmässiger Strahlungsintensität abgibt, sollte er mindestens teilweise Materialien mit guter Wärmeleitfähigkeit wie beispielsweise Aluminium, Aluminiumlegierungen, Keramik oder Glas aufweisen. Sofern die Strahlungsquelle ein elektromagnetisches Wechselfeld erzeugt, kann der Wärmeleiter ganz oder teilweise aus einem ferromagnetischen Material, beispielsweise einer Eisenplatte bestehen. Das elektromagnetische Wechselfeld induzieren in dieser Eisenplatte Wirbelströme, welche zur Erwärmung derselben führen. Je nach Ausgestaltung des Wärmeleiters kann die Oberfläche desselben mit Oberflächenbeschichtungen versehen sein. Ein Wärmeleiter aus Aluminium könnte beispielsweise zur Verbesserung der Korrosionsbeständigkeit und des Abstahlungsvermögens mit einer schwarz eingefärbten Oxydschicht versehen sein.

Idealerweise ist der Wärmeleiter durch eine gehäusefest gelagerte Welle mit einem Antrieb verbunden. Der Antrieb kann ein Motor sein, aber auch passive Antriebe, welche die im Prüfraum vorhandenen Gasströmungen nutzen, sind denkbar. Ebenfalls möglich ist der Antrieb über eine Getriebestufe. Dabei kann der Wärmeleiter durch eine Kugeldrehverbindung (Drehkranz) im Gehäuse gelagert sein. Dies hat den Vorteil, dass in der Mitte des Wärmeleiters keine Welle vorhanden ist, welch eine andere Strahlungsintensität aufweist als der übrige Wärmeleiter. Selbstverständlich kann an Stelle der Kugellagerung auch ein geeigneter Gleitlagerring eingesetzt werden.

Je nach Materialeigenschaften der Probe können selbst bei schonender Erwärmung Teile der Probe sublimieren oder sich zersetzen. Solche Zersetzungsprodukte setzen sich gerne an den heissen Teilen des Strahlers oder des Wärmeleiters fest und bilden dort eine isolierende Schicht. Vorzugsweise ist daher der Wärmeleiter über lösbare Verbindungselemente mit der Welle oder der Kugeldrehverbindung verbunden. Dadurch kann der Wärmeleiter und gegebenenfalls der Strahler problemlos zwecks Reinigung aus- und wieder eingebaut werden. Als lösbare Verbindungselemente sind beispielsweise Bolzen, Stifte, Schrauben, aber auch Einrastelemente wie Kugelsperrbolzen, Federclips, Kugelrasten und dergleichen verwendbar. Sofern der Wärmeleiter mittels einer Kugeldrehverbindung gelagert ist, kann dieser zwecks Reinigung durch einfaches Herausheben und Einlegen aus- und wieder eingebaut werden.

Als Strahler kann beispielsweise eine Heizplatte, eine Heizfolie, ein Heizstrahler, eine Induktionsspule, eine Halogen- oder eine Quarzlampe eingesetzt werden.

Je nach verwendetem Strahler geht dessen Strahlung im Wesentlichen von einem Punkt oder einer Linie aus und verteilt sich im gesamten Prüfraum. Dadurch werden auch Teile des Messgerätes erwärmt und nicht nur die Probe, was zu Energieverlusten und zur Beeinflussung der Messvorrichtung, insbesondere der Wägezelle führen kann. Deshalb kann es sinnvoll sein, wenn der Strahler zusätzlich in einem die Strahlung lenkenden Leitkörper angeordnet ist und dadurch der Wärmeleiter beispielsweise über eine grössere Fläche Strahlung aufnehmen kann. Diese Anforderungen erfüllen beispielsweise Heizplatten und auf ebene Metallkörper aufgezogene Heizfolien ausgezeichnet. Durch ihre Metallstruktur werden ungleiche lokale Erwärmungen bereits innerhalb des Metallkörpers ausgeglichen, so dass deren Wärmestrahlung mit gleichmässigerer Strahlungsintensität und über eine grössere Fläche auf den Wärmeleiter übertragen werden können. Sofern als Strahlungsquelle beispielsweise eine Infrarot- oder Halogenlampe verwendet wird, kann der Leitkörper auch ein mindestens eineinseitig offener Hohlkörper sein, dessen Innenfläche beispielsweise mit einer reflektierenden Oberfläche versehen ist. Solche Leitkörper können die Strahlung je nach Ausgestaltung bündeln, streuen, richten und dergleichen mehr, je nachdem, wie die Strahlungsquelle und der Wärmeleiter ausgestaltet sind. Meistens weisen die Leitkörper eine rotationssymmetrische Grundform auf.

Einzelheiten der erfindungsgemässen Messvorrichtung ergeben sich anhand der Beschreibung der in den Zeichnungen dargestellten Ausführungsbeispiele. Es zeigen:
- Fig. 1: die Darstellung einer Messvorrichtung im Schnitt mit einem Gehäuse, in welchem der Prüfraum und die Wägezelle nebeneinander angeordnet sind und einem den Strahler tragenden Deckel, welcher um eine im Wesentlichen horizontale Schwenkachse am Gehäuse schwenkbar gelagert ist, sowie eine im Deckel integrierte Absaugvorrichtung und einem isolierenden Belüftungskanal welcher zwischen der Wägezelle und dem Prüfraum angeordnet ist;
- Fig. 2a: die gegenüber Figur 1 vergrössert dargestellte Abstrahlungsfläche im Schnitt, jedoch mit Rippen versehen;
- Fig. 2b: die Abstrahlungsfläche aus Figur 2a in Aufsicht gemäss der in Figur 2a eingezeichneten Blickrichtung X mit einer möglichen Ausgestaltung der Rippen;
- Fig. 2c: die Abstrahlungsfläche aus Figur 2a in Aufsicht gemäss der in Figur 2a eingezeichneten Blickrichtung X mit einer zweiten Ausgestaltung der Rippen;
- Fig. 3a: ein im Schnitt dargestellter Wärmeleiter mit integriertem Strahler;
- Fig. 3b: die Abstrahlungsfläche aus Figur 3a in Aufsicht gemäss der in Figur 3a eingezeichneten Blickrichtung Z;
- Fig. 4: eine weitere, im Schnitt gezeigte Ausführung, wobei nur der Prüfraum des Messgerätes mit einem Strahler, einer Probe, einer Probeaufnahme, einer Welle und über ein lösbares Verbindungselement mit der Welle verbundener und mit Durchbrüchen versehener Wärmeleiter dargestellt ist;
- Fig. 5: eine weitere, im Schnitt gezeigte Ausführung, wobei nur der Prüfraum des Messgerätes mit einem Strahler, einem Leitkörper, einer Probe, einer Probeaufnahme und einer Kugeldrehverbindung mit eingelegtem Wärmeleiter dargestellt ist.

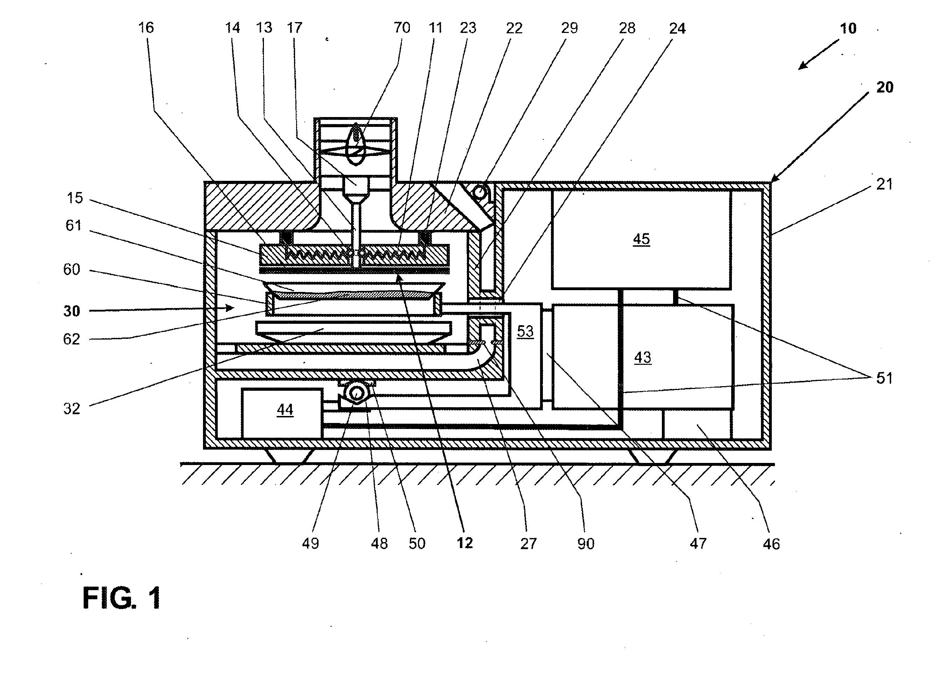

In der Figur 1 ist eine Messvorrichtung 10 im Schnitt dargestellt. Die Messvorrichtung 10 weist ein Gehäuse 20 auf, in welchem ein Prüfraum 30 angeordnet ist. Das Gehäuse 20 ist in einen bewegbaren Gehäuseteil 22 und in einen feststehenden Gehäuseteil 21 unterteilt. Im feststehenden Gehäuseteil 21 sind eine Wägezelle 43, ein Kalibriergewichtauflegemechanismus 44 und mindestens ein Elektronikmodul 45 angeordnet und durch Übertragungsmittel 51 miteinander verbunden. Das Elektronikmodul 45 enthält mindestens ein nicht näher dargestelltes Signalverarbeitungsmodul, gegebenenfalls auch ein Steuerungs- und/oder Regelungsmodul. Die Wägezelle 43 weist mindestens einen feststehenden Bereich 46 und einen Lastaufnahmebereich 47 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 46 ist mit dem feststehenden Gehäuseteil 21 fest verbunden und am Lastaufnahmebereich 47 ist ein Verbindungsglied 53 angeordnet, welches eine Probeaufnahme 60 mit dem Lastaufnahmebereich 47 verbindet. Auf die Probeaufnahme 60 kann wie dargestellt, eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Ferner ist am Verbindungsglied 53 eine Kalibriergewichtauflage 48 ausgebildet. Auf diese Kalibriergewichtauflage 48 kann vom Benutzer oder durch die Steuerung der Messvorrichtung 10 ausgelöst, mittels des Kalibriergewichtauflegemechanismus 44 ein Kalibriergewicht 49 aufgelegt werden, um einen Korrekturwert für das Messsignal in Abhängigkeit des momentanen Betriebszustandes der Messvorrichtung 10 zu ermitteln. Nach der Ermittlung des Korrekturwertes wird das Kalibriergewicht 49 wieder von der Kalibriergewichtauflage 48 entkoppelt und durch den Kalibriergewichtauflegemechanismus 44 bis zum nächsten Kalibriervorgang gegen einen Anschlag 50 gepresst. Um Eckenlastfehler im Korrekturwert zu vermeiden, liegt idealerweise der Massenschwerpunkt des Kalibriergewichts 49 beziehungsweise der gemeinsame Massenschwerpunkt mehrerer Kalibriergewichte 49 nahe der Schwerpunktachse der Probeaufnahme 60 beziehungsweise der Probeschale 61, beziehungsweise der Probe 62. Unter Eckenlastfehler wird die Abweichung im Messwert einer Wägezelle bezeichnet, welche dieselbe Last bei deren exzentrischer Anordnung gegenüber deren zentrischen Anordnung auf der Probeaufnahme 60 verursacht.

Wie in Figur 1 gezeigt wird, ist das bewegbare Gehäuseteil 22 als Deckel ausgestaltet, in welchem ein Strahler 11 angeordnet ist. Dieses bewegliche Gehäuseteil 22 ist über ein Scharnier 29 im oberen Bereich des Gehäuses 20 mit dem feststehenden Gehäuseteil 21 verbunden, wobei die Schwenkachse des Scharniers 29 im Wesentlichen horizontal angeordnet ist. Das bewegbare Gehäuseteil 22 bildet den oberen Teil des Prüfraumes 30. Figur 1 zeigt das Messgerät 10 in Betriebsstellung, das heisst, dass der Deckel des Prüfraums 30 in geschlossener Position dargestellt ist.

Der Strahler 11 ist von einem Leitkörper 15 umschlossen, in dessen Mitte die Lagerstelle 14 ausgebildet ist. Der Leitkörper 15 ist über Stützen 23 mit dem beweglichen Gehäuseteil 22 verbunden. Im Leitkörper 15 können zur Strahlungserzeugung Heizstrahler, Heizfolien, Mikrowellengeneratoren, Halogen- und Quarzlampen angeordnet sein. Zwischen dem Strahler 11 und der Probe 60 ist in der dargestellten Ausführung ein scheibenförmig ausgestalteter Wärmeleiter 16 mit der Abstrahlungsfläche 12 angeordnet. Dieser ist mit einer Welle 13 verbunden, welche in der Lagerstelle 14 drehbar gelagert ist. Der Wärmeleiter 16 besteht vorzugsweise aus einem Werkstoff, der eine gute Wärmeleitfähigkeit aufweist. Aufgrund der Wärmeleitfähigkeit und Dichte sowie der Bearbeitbarkeit und Korrosionsbeständigkeit ist insbesondere die Verwendung von Aluminium und Aluminiumlegierungen sehr vorteilhaft. Diese Aluminiumteile werden vorteilhafterweise beschichtet, idealerweise mit einer schwarz eingefärbten Oxydschicht versehen. Der Wärmeleiter 16 kann aber auch aus keramischen Werkstoffen oder Glas gefertigt sein. Die Drehachse der Welle 13 verläuft in Lastrichtung. Am in Lastrichtung weisenden Wellenende der Welle 13 ist der Wärmeleiter 16 mit der Abstrahlungsfläche 12 angeordnet, deren flächige Ausdehnung im Wesentlichen der flächigen Ausdehnung der Probe 62 entspricht. Im Leitkörper 15 wird Strahlung, im Wesentlichen Wärmestrahlung erzeugt und an den Wärmeleiter 16 übertragen, welcher seinerseits über die gegen die Probe gerichtete Abstrahlungsfläche 12 die Strahlung an die Probe 62 abgibt. Dabei wird der Wärmeleiter 16 während des Trocknungsvorganges von einem Antrieb 17, welcher nachfolgend beschrieben wird, in Drehung versetzt. Aufgrund ihrer ebenen und planaren Ausbildung, ihrer zur Probe 62 parallelen Anordnung, ihrer Rotationsbewegung und ihrer auf die Beabstandung zur Probe 62 abgestimmten Oberflächenstruktur, vermag die Abstrahlungsfläche 12 durch ihre Emissionen in Lastrichtung die Probe 62 gleichmässig zu erwärmen.

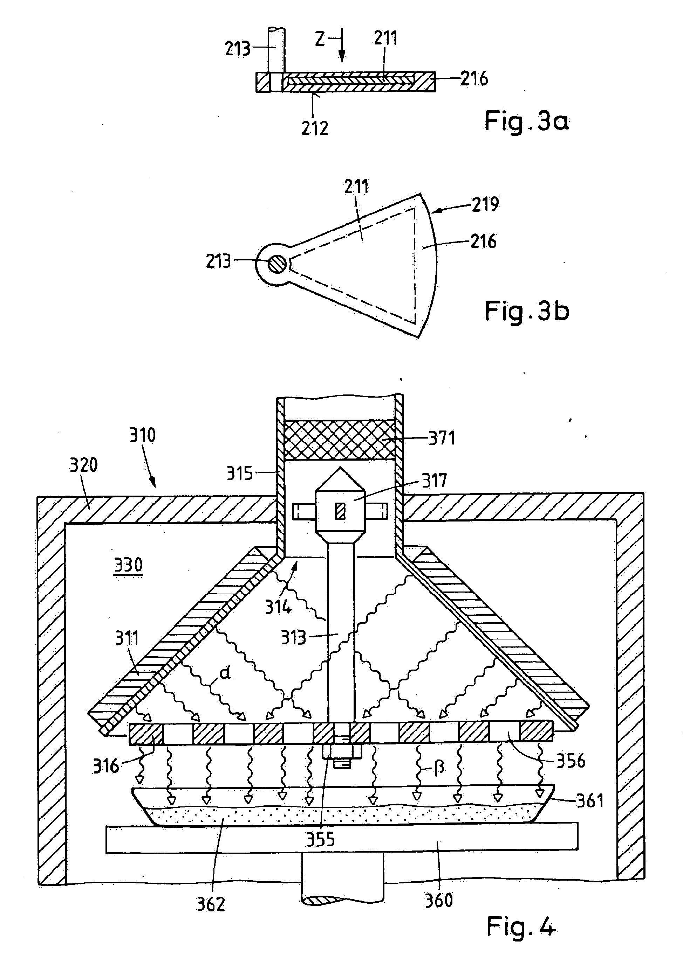

Selbstverständlich kann der gesamte Strahler 11 wie Figur 3a und Figur 3b zeigen, auch direkt im oder am Wärmeleiter 16 angeordnet sein. Die Energieversorgung des Strahlers 11 erfordert jedoch in dieser Ausführungsform einen grösseren Aufwand. Die Energieversorgung mit elektrischer Energie kann beispielsweise über einen Kollektor mit Kohlebürsten oder berührungslos mittels elektromagnetischer Einspeisung sichergestellt werden.

Oberhalb des Strahlers 11 ist eine Absaugvorrichtung 70 im beweglichen Gehäuseteil 22 integriert. Diese besteht aus einem Stator, einem im Stator integrierten Motor und einem Axialrotor. Die vorangehend beschriebene Welle 13 ist in diesem Ausführungsbeispiel mit dem Antrieb 17 verbunden. Selbstverständlich kann die Welle 13 direkt oder über ein Getriebe auch mit dem Antrieb der Absaugvorrichtung 70 verbunden sein, wodurch der separate Antrieb 17 entfällt. Sofern durch den Prüfraum 30 ein ausreichender Volumenstrom des gasförmigen Mediums mit ausreichender Geschwindigkeit entgegen der Lastrichtung strömt, kann der Wärmeleiter 16 auch mit einer Beschaufelung, ähnlich des Turbinenrades einer Axialturbine versehen sein. Der durch die Schaufeln ziehende Gasstrom versetzt dann den Wärmeleiter 16 in Drehung.

Der untere Teil des Prüfraumes 30 ist im feststehenden Gehäuseteil 21 ausgebildet. Das mit der Wägezelle 43 mechanisch verbundene Verbindungsglied 53 ragt ebenfalls in den unteren Teil des Prüfraums 30 hinein, so dass die mit dem Verbindungsglied 53 verbundene Probeaufnahme 60 vollständig im Prüfraum 30 angeordnet ist. Zur thermischen Isolation ist eine Wand 28 des feststehenden Gehäuses 21 zwischen der Wägezelle 43 und dem Prüfraum 30 zumindest teilweise doppelwandig ausgestaltet. Durch die doppelwandige Ausgestaltung der Wand 28 wird ein Belüftungskanal 27 gebildet, durch den ein gasförmiges Medium in den Prüfraum 30 geleitet werden kann. Das während des Messvorganges durchströmende Medium kühlt dabei die Wand 28, so dass die vom Prüfraum 30 ausstrahlende Wärme nicht in den Gehäusebereich der Wägezelle 43 vordringen kann. Selbstverständlich muss das im Belüftungskanal 27 geführte gasförmige Medium nicht zwingend in den Prüfraum 30 eingeleitet werden. Diesbezüglich ist auch ein einfacher Lüftungskanal verwendbar, wie er beispielsweise in der US 6,920,781 B2 offenbart wird.

Ferner kann unterhalb der Probeaufnahme 60 im Prüfraum 30 ein zweiter Strahler 32 angeordnet sein. Da dessen Strahlung auf den Boden der Probeschale 61 einwirkt und die Probeschale 61 meist aus einem wärmeleitenden Material besteht welches selbst einen gewissen Verteilungseffekt aufweist, muss zwischen dem zweiten Strahler 32 und der Probe 62 nicht zwingend ein zweiter, drehbar gelagerter Wärmeleiter angeordnet sein. Sofern dies aber aus Gründen einer noch besseren Strahlungsverteilung zweckmässig erscheint, kann dies selbstverständlich vorgesehen werden.

Im Belüftungskanal 27 können ferner verschiedene Hilfseinrichtungen angeordnet werden. So kann mittels eines Ionisators 90 das gasförmige Medium ionisiert werden, um elektrostatische Ladungen innerhalb des Prüfraumes 30 zu eliminieren. Damit das Verbindungsglied 53 in den Prüfraum hineinragen kann, weist die Wand 28 eine Durchführung 24 auf. Diese ist rohrförmig durchgehend geschlossen ausgestaltet, so dass kein durch den Belüftungskanal 27 strömendes Medium über die Durchführung 24 in den Proberaum 30 gelangen kann oder auf das Verbindungsglied 53 einwirkt.

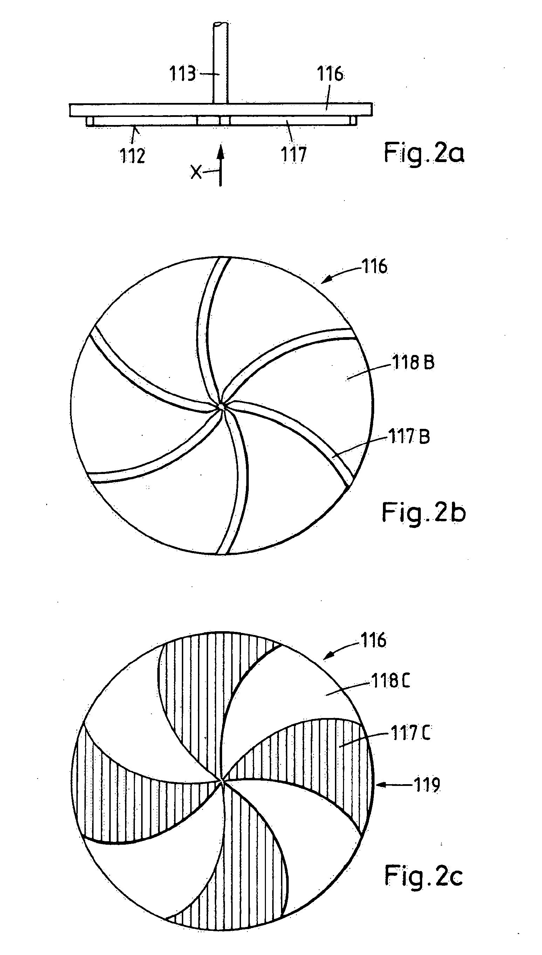

Der in der Figur 2a dargestellte Wärmeleiter 116 im Schnitt entspricht demjenigen aus Figur 1, jedoch ist die Abstrahlungsfläche 112 zusätzlich mit Rippen 117 versehen. Der Formgebung dieser Rippen sind eigentlich keine Grenzen gesetzt. Um aber der Forderung einer möglichst guten Abführung des mit Feuchtigkeit angereicherten gasförmigen Mediums bei gleichzeitig möglichst gleichmässiger Strahlungsintensität gerecht zu werden, sind in den Figuren 2b und 2c zwei bevorzugte Ausgestaltungen in Aufsicht, Blickrichtung X dargestellt.

Der in Figur 2b dargestellte Wärmeleiter 116 weist dünne, hervorstehende Rippen 117B mit rechteckigem Querschnitt auf. Diese Rippen 117B weisen eine Krümmung in radialer Richtung auf. Dementsprechend weisen die durch die Rippen 117B abgegrenzten, flächig ausgeformten Vertiefungen 118B ebenfalls eine Krümmung in radialer Richtung auf. Wie von Pumpen und Lüfterrädern bekannt, kann durch die Krümmung die radiale Strömungsgeschwindigkeit bedarfsgerecht gewählt werden. Dadurch können Stauungen des gasförmigen Mediums zwischen den Rippen 117B verhindert werden, welche übermässige Turbulenzen zwischen der Probe und der Abstrahlungsfläche verursachen könnten. Solche Turbulenzen könnten das von der Wägezelle ermittelte Messergebnis empfindlich beeinflussen. Selbstverständlich kann an der Abstrahlungsfläche auch nur eine einzige Rippe ausgebildet sein, deren radiale Krümmung so gross ist, dass sie eine Spirale auf der Abstrahlungsfläche bildet.

Der in Figur 2c dargestellte Wärmeleiter 116 weist ebenfalls hervorstehende Rippen 117C auf, welche zur besseren Illustration schraffiert dargestellt sind. Anders als in Figur 2b sind diese Rippen 117C aber gegen den Rand 119 des Wärmeleiters 116 hin kontinuierlich breiter ausgestaltet, so dass die erhabenen Flächen der Rippen 117C den Flächen der zwischen den Rippen 117C ausgebildeten Vertiefungen 118C entsprechen. Dadurch lässt sich gegenüber der in Figur 2b dargestellter Ausführung die Gleichmässigkeit der Strahlungsintensität nochmals verbessern. Die Rippen 117C und Vertiefungen 118C weisen ebenfalls, wie in Figur 2b ausführlich beschrieben, eine Krümmung in radialer Richtung auf.

Ein weiteres Ausführungsbeispiel zeigt Figur 3a in schematischer Darstellung. Ein im Schnitt dargestellter Wärmeleiter 216 weist einen integrierten Strahler 211 auf. Der Wärmeleiter 216 ist gegenüber der Drehachse und Welle 213 asymmetrisch ausgestaltet. Damit eine gleichmässige Strahlungsverteilung erreicht werden kann, ist der Wärmeleiter 216 gegen die Abstrahlungsfläche 212 hin massiver ausgestaltet. Der Strahler 211, beispielsweise eine Heizfolie, kann gegebenenfalls auch auf den Wärmeleiter 216 aufgesetzt sein.

Figur 3b zeigt den in Figur 3a beschriebenen Wärmeleiter 216 in schematischer Darstellung, in Aufsicht aus Blickrichtung Z. Der Wärmeleiter 216 weist die Form eines Kreissektors auf. Durch diese Ausgestaltung wird vermieden, dass die Strahlungsdichte gegen die Welle 213 hin grösser ist als gegen den Rand 219 hin, da dort naturgemäss die Umfangsgeschwindigkeit grösser ist als im Bereich der Welle 213. Der Strahler 211 weist einen dreieckigen Grundriss auf und ist, wie in Figur 3a beschrieben, vollkommen im Wärmeleiter 216 eingebettet. Aufgrund dieser Einbettung ist bezogen auf den Energiefluss beziehungsweise auf die Weiterleitung der Strahlung auch bei der in den Figur 3a und Figur 3b dargestellten Ausführung immer ein drehbar gelagerter Wärmeleiter 216 zwischen dem Strahler 211 und der Probe angeordnet.

Figur 4 zeigt eine weitere Ausführungsvariante eines erfindungsgemässen Messgerätes 310. Ein trichterförmig, rotationssymmetrisch ausgebildeter Trägerkörper ist im Bereich dessen schmaler Öffnung 314 mit dem, den Proberaum 330 umgebenden Gehäuse 320 verbunden. Die Symmetrieachse des Trägerkörpers 315 verläuft in Lastrichtung, die im Durchmesser schmale Öffnung 314 zeigt entgegen der Lastrichtung. An der kegelförmig ausgebildeten Aussenseite des Trägerkörpers 315 sind Strahler 311 angeordnet deren Emissionen α wie in Figur 4 angedeutet, gegen einen drehbar angeordneten, scheibenförmigen Wärmeleiter 316 gerichtet sind. Der Wärmeleiter 316 ist über ein lösbares Verbindungselement 355 mit einer Welle 313 verbunden. Die Welle 313 wird durch einen Antrieb 317, welcher in der schmalen Öffnung 314 angeordnet ist, angetrieben. Das lösbare Verbindungselement 355 ist als Schraubenverbindung dargestellt, es sind selbstverständlich auch alle anderen, bekannten lösbaren und unlösbaren Verbindungselemente einsetzbar.

Durch die Anordnung des Wärmeleiters 316 zwischen den Strahler 311 und der Probe 62 wird die von den Strahlern 311 emittierte Strahlung α vom Wärmeleiter 316 aufgenommen. Vom Wärmeleiter 316 wird die aufgenommene Energie als Wärmestrahlung β an die Probe 362 abgegeben. Wie bereits die unterschiedlichen Bezeichnungen vermuten lassen, muss es sich dabei nicht um identische Strahlungen handeln. So kann im Wärmeleiter 316 auch eine Strahlungsumwandlung erfolgen, beispielsweise die Umwandlung von elektromagnetischen Wellen (Mikrowelle, Induktion) in Wärmestrahlung.

Der scheibenförmige, rotationssymmetrische Wärmeleiter 316 weist mehrere Durchbrüche 356 auf, durch welche das mit Feuchtigkeit gesättigte, erhitzte gasförmige Medium durchtreten und gegen die schmale Öffnung 314 hin aus dem Prüfraum 330 austreten kann. Somit wird vermieden, dass zwischen dem Wärmeleiter 316 und der Probe 362 ein mit Feuchtigkeit gesättigtes Gaspolster verharren kann. Da Proben 362 auch Lösungsmittel oder andere leichtflüchtige Komponenten aufweisen können, können während des Trocknungsvorganges weitere flüchtige Substanzen aus der Probe 362 ausgetrieben werden, welche beispielsweise starken Eigengeruch haben, toxisch oder ätzend sind. Vorzugsweise verfügt daher die als Abluftkanal dienende schmale Öffnung 314 des Trägerkörpers 315 über einen Kondensator 371, in welchem die aus der Probe 362 ausgetretene Feuchtigkeit und/oder flüchtige Substanz aus dem gasförmigen Medium nach verlassen des Prüfraumes 330 mittels Kühlung auskondensiert wird. Die schmale Öffnung 314 kann an Stelle des Kondensators oder zusätzlich zum Kondensator einen chemischen oder mechanischen Filter aufweisen. In einer besonders bevorzugten Ausführung weist der Filter ein Adsorptionsmittel, beispielsweise Aktivkohle auf. Die Probe 362 ist auf einer Probeschale 361 aufgebracht. Diese wiederum liegt auf der Probeaufnahme 360, in Figur 4 als konventionelle Waagschale einer Waage dargestellt.

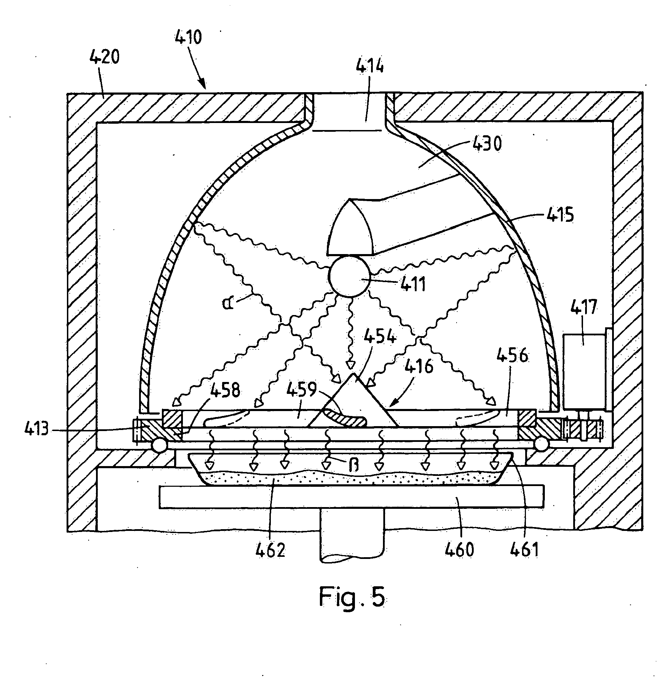

Figur 5 zeigt eine weitere Ausführungsvariante eines erfindungsgemässen Messgerätes 410. Ein rotationssymmetrisch ausgebildeter Leitkörper 415 ist im Bereich dessen schmaler Öffnung 414 mit dem, den Proberaum 430 umgebenden Gehäuse 420 verbunden. Die Symmetrieachse des Leitkörpers 415 verläuft in Lastrichtung, die im Durchmesser schmale Öffnung 414 zeigt entgegen der Lastrichtung. Die Innenseite des Leitkörpers 415 ist mit einer nicht dargestellten, strahlungsreflektierenden Oberfläche versehen. Im Brennpunkt des Leitkörpers 415 ist ein Strahler 411 angeordnet, dessen Emissionen α wie in Figur 5 angedeutet, in alle Richtungen emittiert werden, wobei ein Teil der Strahlung α von der reflektierenden Oberfläche gegen die Mitte eines scheibenförmigen Wärmeleiter 416 reflektiert werden. Der Wärmeleiter 416 ist formschlüssig, lösbar mit einer Kugeldrehverbindung 413 verbunden. Der bewegliche Teil der Kugeldrehverbindung 413 wird durch einen Antrieb 417, welcher zwischen dem Gehäuse 420 und dem Leitkörper 415 angeordnet ist, angetrieben. Die Übertragung des Drehmomentes vom Antrieb 417 an die Kugeldrehverbindung 413 kann reibschlüssig über eine Reibradpaarung oder wie dargestellt, formschlüssig über eine Zahnradgetriebestufe erfolgen. In Figur 5 ist der Wärmeleiter 416 auf einen an der Innenseite der Kugeldrehverbindung 413 ausgebildeten Bund 458 lose aufgelegt. Selbstverständlich kann der Wärmeleiter 416 auch mittels lösbarer Verbindungselemente gegen herausfallen oder verschieben gesichert sein.

Durch die Anordnung des Wärmeleiters 416 zwischen den Strahler 411 und der Probe 462 wird die von den Strahlern 411 emittierte Strahlung α vom Wärmeleiter 416 aufgenommen. Vom Wärmeleiter 416 wird die aufgenommene Energie als Wärmestrahlung β an die Probe 462 abgegeben.

Der scheibenförmige, rotationssymmetrische Wärmeleiter 416 weist mehrere Durchbrüche 456 auf, durch welche das mit Feuchtigkeit gesättigte, erhitzte gasförmige Medium durchtreten und gegen die schmale Öffnung 414 hin aus dem Prüfraum 430 austreten kann. Durch die Durchbrüche 456 werden drei Stege 459 gebildet, welche eine strömungsgünstige Profilierung aufweisen. Die so ausgebildeten Stege 459 dienen dadurch nicht nur als Abstrahlungsfläche gegen die Probe 462 hin, sondern unterstützen gleichzeitig die Entfernung der Feuchtigkeit aus der Umgebung der Probe 462. Sofern die Umdrehungszahl des Wärmeleiters 416 klein ist, kann eine annähernd laminare Strömung, und/oder zwischen der Probe 462 und dem Wärmeleiter 416 ein leichter Unterdruck erzeugt werden. In der Mitte des Wärmeleiters 416 ist ein kegelförmiger, als Verbindungselement für die Stege 459 dienender Aufnahmekörper 454 ausgebildet, auf welchen die vom Leitkörper 415 reflektierte Strahlung α gerichtet ist. Die Probe 462 ist auf einer Probeschale 461 aufgebracht. Diese wiederum liegt auf der Probeaufnahme 460, in Figur 5 ebenfalls als konventionelle Waagschale einer Waage dargestellt.

Die vorgestellten Ausführungsformen zeigen Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt. Ferner sind Lösungen, bei denen die Welle nicht durch eine Bohrung im Strahler geführt, sondern am Strahler vorbeigeführt ist möglich.Ausführungsmöglichkeiten sind auch nicht auf Ausführungen mit nur einer Welle beschränkt. Ebenso ist eine Rotationsbewegung für die Funktion nicht zwingend notwendig, auch oszillierende Bewegungen der Welle und der Abstrahlungsfläche sind möglich. Ferner ist der Erfindungsgegenstand auch nicht an die in Figur 1 gezeigte Konfiguration von Wägezelle und Gehäuse gebunden, sondern kann in allen bekannten Messgeräten mit oberhalb der Probe angeordneten Strahlern eingesetzt werden.

**Bezugszeichenliste**

| | |
|---|---|
| 410,310,10 | Messvorrichtung |
| 411, 311, 211, 11 | Strahler |
| 212, 112, 12 | Abstrahlungsfläche |
| 313,213,13 | Welle |
| 14 | Lagerstelle |
| 415, 15 | Leitkörper |
| 416, 316, 216, 116, 16 | Wärmeleiter |
| 417,317, 17 | Antrieb |
| 420,320,20 | Gehäuse |
| 21 | feststehendes Gehäuseteil |
| 22 | bewegbares Gehäuseteil |
| 23 | Stütze |
| 24 | Durchführung |
| 27 | Belüftungskanal |
| 28 | Wand |
| 29 | Scharnier |
| 430, 330, 30 | Prüfraum |
| 32 | zweiter Strahler |
| 43 | Wägezelle |
| 44 | Kalibrierauflegemechanismus |
| 45 | Elektronikmodul |
| 46 | feststehender Bereich |
| 47 | Lastaufnahmebereich |
| 48 | Kalibriergewichtauflage |
| 49 | Kalibriergewicht |
| 50 | Anschlag |
| 51 | Übertragungsmittel |
| 53 | Verbindungsglied |
| 460, 360, 60 | Probeaufnahme |
| 461, 361, 61 | Probeschale |
| 462, 362, 62 | Probe |
| 70 | Absaugvorrichtung |
| 90 | Ionisator |
| 117C, 117B, 117 | Rippe |
| 118C, 118B | Vertiefung |
| 219, 119 | Rand |
| 414, 314 | schmale Öffnung |
| 315 | Trägerkörper |
| 355 | lösbares Verbindungselement |
| 456,356 | Durchbruch |
| 371 | Kondensator |
| 413 | Kugeldrehvorrichtung |
| 454 | Aufnahmekörper |
| 458 | Bund |
| 459 | Steg |

## Patentansprüche

1. Messgerät (10, 310, 410) zur gravimetrischen Feuchtigkeitsbestimmung, welches mindestens einen Strahler (11, 32, 211, 311, 411), eine Wägezelle (43) und eine mit der Wägezelle (43) verbindbare Probeaufnahme (60, 360, 460) aufweist, auf welcher Probeaufnahme (60, 360, 460) eine Probe (62, 362, 462) auflegbar beziehungsweise entfernbar ist, der mindestens eine Strahler (11, 32, 211, 311, 411) bezogen auf die Lastrichtung oberhalb und/oder unterhalb der Probe (60, 360, 460) angeordnet ist, **dadurch gekennzeichnet, dass** zwischen dem mindestens einen Strahler (11, 32, 211, 311, 411) und der Probe (60, 360, 460) mindestens ein drehbar gelagerter Wärmeleiter (16, 116, 216, 316, 416) angeordnet ist, dessen Drehachse orthogonal zur ausgedehnten Fläche der Probeaufnahme (60, 360, 460) ausgerichtet ist, wobei durch den Wärmeleiter (16, 116, 216, 316, 416) die Strahlung α des Strahlers (11, 32, 211, 311, 411) zumindest teilweise aufnehmbar, die aufgenommene Strahlung α über mindestens eine Abstrahlungsfläche (12, 112, 212) des Wärmeleiters (16, 116, 216, 316, 416) als Wärmestrahlung β an die Probe (62, 362, 462) abgebbar und zumindest infolge seiner Drehbarkeit die gesamte Oberfläche der Probe (62, 362, 462) bestrahlbar ist und dass das Messgerät einen Antrieb aufweist, der den Wärmeleiter während eines Trocknungsvorganges in Drehung versetzt.

2. Messgerät (10, 310, 410) nach Anspruch 1, **dadurch gekennzeichnet, dass** der Wärmeleiter (16, 116, 216, 316, 416) im Wesentlichen in einer Ebene orthogonal zur Drehachse flächig ausgestaltet ist, wobei die Abstrahlungsfläche (12, 112, 212) im Wesentlichen der gegen die Probe (62, 362, 462) hin gerichteten Fläche des Wärmeleiters (16, 116, 216, 316, 416) entspricht.

3. Messgerät (10, 310, 410) nach Anspruch 1 oder 2, **dadurch gekennzeichnet, dass** die Drehachse des Wärmeleiters (16, 116, 216, 316, 416) parallel zur Lastrichtung angeordnet ist.

4. Messgerät (10, 310, 410) nach einem der Ansprüche 1 bis 3, **dadurch gekennzeichnet, dass** die Abstrahlungsfläche (12, 112, 212) einer Kreisfläche oder mindestens einem Kreissektor entspricht.

5. Messgerät (10, 310, 410) nach einem der Ansprüche 1 bis 4, **dadurch gekennzeichnet, dass** der Wärmeleiter (16, 116, 216, 316, 416) in der Abstrahlungsfläche (12, 112, 212) vorzugsweise in Lastrichtung verlaufende Durchbrüche (356, 456) und/oder Einschnitte aufweist und/oder aus porösem, in Lastrichtung gasdurchlässigem Material besteht.

6. Messgerät (10, 310, 410) nach einem der Ansprüche 1 bis 4, **dadurch gekennzeichnet, dass** der Wärmeleiter (16, 116, 216, 316, 416) mindestens einen Durchbruch oder Einschnitt (456) aufweist, durch dessen Ausgestaltung am Wärmeleiter mindestens ein Steg (459) analog eines Propellerblattes oder einer Schaufel ausgebildet ist und durch diesen mindestens einen Steg (459) eine vorzugsweise entgegen der Lastrichtung gerichtete Strömung im gasförmigen Medium erzeugbar ist.

7. Messgerät (10, 310, 410) nach einem der Ansprüche 1 bis 6, **dadurch gekennzeichnet, dass** die Abstrahlungsfläche (12, 112, 212) mindestens eine Rippe (117, 117B, 117C), Rille, Nut oder Vertiefung (118B, 118C) aufweist.

8. Messgerät (10, 310, 410) nach einem der Ansprüche 1 bis 7, **dadurch gekennzeichnet, dass** der Wärmeleiter (16, 116, 216, 316, 416) mindestens teilweise Aluminium, Aluminiumlegierungen, Eisen, Keramik oder Glas aufweist.

9. Messgerät (10, 310, 410) nach einem der Ansprüche 1 bis 8, **dadurch gekennzeichnet, dass** der Wärmeleiter (16, 116, 216, 316, 416) durch eine gehäusefest gelagerte Welle (13, 213, 313) oder durch eine mittels einer Kugeldrehverbindung (413) gelagerten Getriebestufe mit dem Antrieb (17, 317, 417) verbunden ist.

10. Messgerät (10, 310, 410) nach Anspruch 9, **dadurch gekennzeichnet, dass** der Wärmeleiter (16, 116, 216, 316, 416) über lösbare Verbindungselemente (355) mit der Welle (13, 213, 313) oder der Kugeldrehverbindung (413) verbunden ist.

11. Messgerät (10, 310, 410) nach einem der Ansprüche 1 bis 10, **dadurch gekennzeichnet, dass** der mindestens eine Strahler (11, 32, 211, 311, 411) eine Heizplatte, eine Heizfolie, ein Heizstrahler, eine Induktionsspule, eine Halogen- oder eine Quarzlampe ist.

12. Messgerät (10, 310, 410) nach einem der Ansprüche 1 bis 11, **dadurch gekennzeichnet, dass** der mindestens eine Strahler (11, 32, 211, 311, 411) in einem der Strahlungslenkung dienenden Leitkörper (15, 415) angeordnet ist.

13. Messgerät (10, 310, 410) nach Anspruch 12, **dadurch gekennzeichnet, dass** der Leitkörper (15, 415) eine ebene Metallplatte (15) oder ein mindestens einseitig offener Leitkörper (415) ist, dessen Innenfläche mit einer reflektierenden Oberfläche versehener ist, mittels welcher die Strahlung α des Strahlers (11, 32, 211, 311, 411) auf den Wärmeleiter (416) fokussierbar ist.

## Claims

1. Measuring instrument (10, 310, 410) for gravimetric moisture determination, comprising at least one radiator (11, 32, 211, 311, 411), a weighing cell (43), and a sample receiver (60, 360, 460) which can be connected to the weighing cell (43) and is configured so that a sample (62, 362, 462) can be placed on or removed from the sample receiver (60, 360, 460), wherein the at least one radiator (11, 32, 211, 311, 411) is arranged above and/or below the sample (62, 362, 462) in relation to the load direction, **characterized in that** at least one rotatably supported heat conductor (16, 116, 216, 316, 416) is arranged between the at least one radiator (11, 32, 211, 311, 411) and the sample (62, 362, 462), wherein the axis of rotation of said heat conductor (16, 116, 216, 316, 416) is oriented orthogonal to the plane in which the sample receiver (60, 360, 460) extends, wherein the heat conductor (16, 116, 216, 316, 416) is able to absorb at least part of the radiation α of the radiator (11, 32, 211, 311, 411), further is able to deliver the absorbed radiation α in the form of heat radiation β to the sample (62, 362, 462) through at least one radiation-releasing surface (12, 112, 212) of the heat conductor (16, 116, 216, 316, 416) and, due to its ability to rotate, to irradiate the entire surface of the sample (62, 362, 462), wherein the measuring instrument comprises a drive source, which the heat conductor is set in rotation by the drive mechanism during the drying process.

2. Measuring instrument (10, 310, 410) according to claim 1, **characterized in that** the heat conductor (16, 116, 216, 316, 416) is designed so that it substantially extends in a plane that is orthogonal to the axis of rotation, wherein the radiation-releasing surface (12, 112, 212) substantially coincides with the surface area of the heat conductor (16, 116, 216, 316, 416) that faces towards the sample (62, 362, 462).

3. Measuring instrument (10, 310, 410) according to claim 1 or 2, **characterized in that** the axis of rotation of the heat conductor (16, 116, 216, 316, 416) is arranged parallel to the direction of the load.

4. Measuring instrument (10, 310, 410) according to one of the claims 1 to 3, **characterized in that** the radiation-releasing surface (12, 112, 212) equals the area of a circle or at least a sector of a circle.

5. Measuring instrument (10, 310, 410) according to one of the claims 1 to 4, **characterized in that** the heat conductor (16, 116, 216, 316, 416) has perforations (356, 456) and/or incisions in the radiation-releasing surface (12, 112, 212) which are oriented preferably in the direction of the load and/or that the heat conductor (16, 116, 216, 316, 416) consists of a porous material allowing gas to pass through the heat conductor in the direction of the load.

6. Measuring instrument (10, 310, 410) according to one of the claims 1 to 4, **characterized in that** the heat conductor (16, 116, 216, 316, 416) has at least one perforation or incision (456) designed in such a way that at least one transverse member (459) is formed on the heat conductor with a shape analogous to a propeller blade or a scoop, and that by means of said transverse member (459) a flow movement that is preferably directed against the direction of the load can be generated in the gaseous medium.

7. Measuring instrument (10, 310, 410) according to one of the claims 1 to 6, **characterized in that** the radiation-releasing surface (12, 112, 212) has at least one protruding ridge (117, 117B, 117C), groove, channel or depression (118B, 118C).

8. Measuring instrument (10, 310, 410) according to one of the claims 1 to 7, **characterized in that** the heat conductor (16, 116, 216, 316, 416) comprises at least in part aluminum, aluminum alloys, iron, a ceramic material, or glass.

9. Measuring instrument (10, 310, 410) according to one of the claims 1 to 8, **characterized in that** the heat conductor (16, 116, 216, 316, 416) is connected to a drive source (17, 317, 417) through a shaft (13, 213, 313) that runs in one or more bearings which are rigidly connected to the housing, or that the heat conductor (16, 116, 216, 316, 416) is supported by a turntable (413) running on roller balls and connected through a gear stage to the drive source (17, 317, 417).

10. Measuring instrument (10, 310, 410) according to claim 9, **characterized in that** the heat conductor (16, 116, 216, 316, 416) is connected to the shaft (13, 213, 313) or to the roller-ball-supported turntable (413) by way of releasable connector elements.

11. Measuring instrument (10, 310, 410) according to one of the claims 1 to 10, **characterized in that** the at least one radiator (11, 32, 211, 311, 411) is a heating plate, a heating foil, a heat radiator, an induction coil, a halogen lamp, or a quartz lamp.

12. Measuring instrument (10, 310, 410) according to one of the claims 1 to 11, **characterized in that** the at least one radiator (11, 32, 211, 311, 411) is arranged inside a radiation-guiding body (15, 415) that serves to guide the radiation.

13. Measuring instrument (10, 310, 410) according to claim 12, **characterized in that** the radiation-guiding body (15, 415) is a flat metal plate (15) or a radiation-guiding body (415) that is open on at least one side and whose inside is provided with a reflective surface, by means of which the radiation α of the radiator (11, 32, 211, 311, 411) can be focused on the heat conductor (416).

## Revendications

1. Dispositif de mesure (10, 310, 410) pour la détermination gravimétrique de l'humidité, comportant au moins un émetteur de rayonnement (11, 32, 211, 311, 411), une cellule de pesage (43) et un support d'échantillon (60, 360, 460) apte à être relié à la cellule de pesage (43), un échantillon (62, 362, 462) pouvant être disposé sur le support d'échantillon (60, 360, 460) ou ôté de celui-ci, l'au moins un émetteur de rayonnement (11, 32, 211, 311, 411) est agencé au-dessus et/ou en-dessous de l'échantillon (60, 360, 460) par rapport au sens de chargement, **caractérisé en ce qu'**au moins un conducteur thermique (16, 116, 216, 316, 416), dont l'axe de rotation est orienté orthogonalement à la surface étendue du support d'échantillon (60, 360, 460), est monté de façon rotative entre l'au moins un émetteur de rayonnement (11, 32, 211, 311, 411) et l'échantillon (60, 360, 460), dans lequel le conducteur thermique (16, 116, 216, 316, 416) permet de recevoir au moins partiellement le rayonnement α de l'émetteur de rayonnement (11, 32, 211, 311, 411), de délivrer le rayonnement α reçu à l'échantillon (62, 362, 462) en tant que rayonnement de chaleur β, par au moins une surface de rayonnement (12, 112, 212) du conducteur thermique (16, 116, 216, 316, 416), et d'irradier l'ensemble de la surface supérieure de l'échantillon (62, 362, 462), au moins du fait de sa faculté de rotation, et **en ce que** le dispositif de mesure comporte un entraînement faisant tourner le conducteur thermique pendant un procédé de séchage.

2. Dispositif de mesure (10, 310, 410) selon la revendication 1, **caractérisé en ce que** le conducteur thermique (16, 116, 216, 316, 416) est conçu essentiellement à plat dans un plan orthogonal à l'axe de rotation, dans lequel la surface de rayonnement (12, 112, 212) correspond essentiellement à la surface du conducteur thermique (16, 116, 216, 316, 416) qui est orientée vers l'échantillon (62, 362, 462).

3. Dispositif de mesure (10, 310, 410) selon la revendication 1 ou 2, **caractérisé en ce que** l'axe de rotation du conducteur thermique (16, 116, 216, 316, 416) est agencé parallèlement au sens de chargement.

4. Dispositif de mesure (10, 310, 410) selon l'une des revendications 1 à 3, **caractérisé en ce que** la surface de rayonnement (12, 112, 212) correspond à une surface circulaire ou du moins à un secteur de cercle.

5. Dispositif de mesure (10, 310, 410) selon l'une des revendications 1 à 4, **caractérisé en ce que** dans sa surface de rayonnement (12, 112, 212), le conducteur thermique (16, 116, 216, 316, 416) comporte des brèches (356, 456) et/ou des entailles s'étendant de préférence dans le sens de chargement, et/ou est constitué d'un matériau poreux laissant passer le gaz dans le sens de chargement.

6. Dispositif de mesure (10, 310, 410) selon l'une des revendications 1 à 4, **caractérisé en ce que** le conducteur thermique (16, 116, 216, 316, 416) comporte au moins une brèche ou entaille (456) dont la configuration sur le conducteur thermique forme au moins une branche (459) similaire à une pale d'hélice ou à une pelle, et **en ce que** cette au moins une branche (459) permet de produire un flux orienté de préférence contre le sens de chargement dans le milieux gazeux.

7. Dispositif de mesure (10, 310, 410) selon l'une des revendications 1 à 6, **caractérisé en ce que** la surface de rayonnement (12, 112, 212) comporte au moins une côte (117, 117B, 117C), une rainure, une gorge ou un creux (118B, 118C).

8. Dispositif de mesure (10, 310, 410) selon l'une des revendications 1 à 7, **caractérisé en ce que** le conducteur thermique (16, 116, 216, 316, 416) est au moins partiellement constitué d'aluminium, d'alliages d'aluminium, de fer, de céramique ou de verre.

9. Dispositif de mesure (10, 310, 410) selon l'une des revendications 1 à 8, **caractérisé en ce que** le conducteur thermique (16, 116, 216, 316, 416) est relié à l'entraînement (17, 317, 417) par un arbre (13, 213, 313) monté fixement dans le boîtier ou par un étage de transmission monté au moyen d'un palier à rotule (413).

10. Dispositif de mesure (10, 310, 410) selon la revendication 9, **caractérisé en ce que** le conducteur thermique (16, 116, 216, 316, 416) est relié à l'arbre (13, 213, 313) ou au palier à rotule (413) par des éléments d'assemblage (355) détachables.

11. Dispositif de mesure (10, 310, 410) selon l'une des revendications 1 à 10, **caractérisé en ce que** l'au moins un émetteur de rayonnement (11, 32, 211, 311, 411) est une plaque chauffante, une feuille chauffante, un émetteur de chaleur, une bobine d'induction, une lampe halogène ou une lampe à quartz.

12. Dispositif de mesure (10, 310, 410) selon l'une des revendications 1 à 11, **caractérisé en ce que** l'au moins un émetteur de rayonnement (11, 32, 211, 311, 411) est agencé dans un corps de guidage (15, 415) servant à diriger le rayonnement.

13. Dispositif de mesure (10, 310, 410) selon la revendication 12, **caractérisé en ce que** le corps de guidage (15, 415) est une plaque métallique plane (15) ou un corps de guidage (415) ouvert au moins d'un côté, dont la surface intérieure est pourvue d'une surface réfléchissante permettant de focaliser le rayonnement α de l'émetteur de rayonnement (11, 32, 211, 311, 411) sur le conducteur thermique (16, 116, 216, 316, 416).
